# EUROPÄISCHE PATENTSCHRIFT

(11) **EP 4 007 856 B1**
(45) Veröffentlichungstag und Bekanntmachung des Hinweises auf die Patenterteilung: **20.11.2024**
(21) Anmeldenummer: 20750230.3
(22) Anmeldetag: 30.07.2020
(51) Int. Cl.: F04B 15/02

(54) **UMSCHALTEINRICHTUNG FÜR EINE BETONPUMPE**
SWITCHING DEVICE FOR A CONCRETE PUMP
DISPOSITIF DE CHANGEMENT POUR UNE POMPE À BÉTON

(30) Priorität: 01.08.2019 DE 102019120825
(43) Veröffentlichungstag der Anmeldung: 08.06.2022
(73) Patentinhaber: Putzmeister Engineering GmbH, 72631 Aichtal (DE)
(72) Erfinder: KANDLER, Andreas, 73760 Ostfildern (DE); BENZ, Andreas, 73240 Wendlingen (DE)
(74) Vertreter: Glawe, Delfs, Moll
(86) Internationale Anmeldenummer: PCT/EP2020/071470
(87) Internationale Veröffentlichungsnummer: WO 2021/018994

(56) Entgegenhaltungen:
- WO-A1-2005/093253
- DE-A1- 102015 103 180
- DE-A1- 2 925 674
- US-B2- 6 986 303

## Beschreibung

Die Erfindung betrifft eine Umschalteinrichtung zur Umschaltung eines Hydraulikflusses einer Betonpumpe sowie eine Betonpumpe. Die Erfindung betrifft ferner ein Verfahren zur Umschaltung eines Hydraulikflusses einer Betonpumpe.

Die Verwendung von Umschalteinrichtungen zur Umschaltung eines Hydraulikflusses in Betonpumpen ermöglicht eine flexible Verlegung der Antriebsseite zwischen der Stangenseite und der Bodenseite eines Antriebszylinders. Je nach Anwendungsfall werden Betonpumpen stangenseitig oder bodenseitig betrieben, wobei die Antriebszylinder standardmäßig stangenseitig angetrieben werden. Ein bodenseitiger Betrieb der Antriebszylinder ist jedoch ohne weiteres möglich, wenn die restlichen Komponenten der Betonpumpe und die Druckmittelleitungen darauf ausgelegt sind.

Bei einem stangenseitig angetriebenen Antriebszylinder können aufgrund der schnelleren Hubzeiten höhere Betonfördermengen gefördert werden. Bei einem bodenseitig angetriebenen Antriebszylinder kann ein höherer Betonförderdruck bei maximal zur Verfügung stehendem Hydrauliköldruck erreicht werden, da die große Bodenseite des Antriebszylinders genutzt wird.

Ist bei einem stangenseitigen Betrieb die maximale Fördererhöhe erreicht, kann ein Bediener die Betonpumpe auf bodenseitigen Betrieb umstellen, um die maximale Förderhöhe zu erhöhen und so höher liegende Stockwerke zu erreichen. Außerdem kann ein Bediener die Betonpumpe von einem bodenseitigen Betrieb auf stangenseitigen Betrieb umstellen, wenn mehr Fördermenge benötigt wird. In letzterem Fall ist eine schnelle Umschaltung der Betriebsart wichtig, damit der Beton in der Betonleitung nicht aushärtet.

Aus dem Stand der Technik sind Stangen-Boden-Umschalteinrichtungen bekannt, bei denen große und unflexible Druckschläuche abmontiert und an anderer Stelle wieder neu montiert werden müssen. Bei der Ummontage der Druckschläuche kann Hydrauliköl auslaufen oder es können Verunreinigungen in das System gelangen. Ferner ist die Zugänglichkeit zu den Druckschläuchen innerhalb der Maschine zum Teil nur eingeschränkt möglich, sodass extra längere/zusätzliche Druckschläuche nach außen zu den Anschlussstellen verlegt werden müssen. Dies erfordert einen hohen Zeit- und Montageaufwand und ist zudem fehleranfällig.

US 6,986,303 B2 offenbart ein Ventil zur Umschaltung eines Hydraulikflusses einer Betonpumpe. Das Ventil ist zwischen einer Pumpe und zwei Förderzylindern angeordnet und weist ein Gehäuse auf, in dem ein eine Vielzahl von Fluidleitungen führender Körper beweglich gelagert ist. Der Körper ist mithilfe einer Betätigungseinrichtung reversibel zwischen einer ersten und einer zweiten Position überführbar.

Weitere Umschalteinrichtungen des Standes der Technik sind aus der DE 10 2015 103 180 A1, der DE 29 256 74 A1 und der WO 2005/093253 A1 bekannt.

Der Erfindung liegt die Aufgabe zugrunde eine gegenüber dem Stand der Technik verbesserte Umschalteinrichtung bereitzustellen.

Gelöst wird diese Aufgabe durch eine Umschalteinrichtung gemäß dem Hauptanspruch, eine Betonpumpe gemäß dem Patentanspruch 14 und einem Verfahren zur Umschaltung eines Hydraulikflusses einer Betonpumpe gemäß dem Patentanspruch **15.**

Demnach betrifft die Erfindung eine Umschalteinrichtung zur Umschaltung eines Hydraulikflusses einer Betonpumpe, mit einer ersten Anschlusskomponente zur Verbindung mit einer Hydraulikpumpe, einer zweiten Anschlusskomponente zur Verbindung mit einem Antriebszylinder und einer zwischen der ersten und zweiten Anschlusskomponente angeordneten Verteileinheit. Die erste Anschlusskomponente weist zwei Fluidführungen auf und die zweite Anschlusskomponente weist ein erstes und zweites Fluid-führungspaar auf. Die Verteileinheit ist reversibel überführbar zwischen einer ersten Position, in der die Fluidführungen der ersten Anschlusskomponente mit dem ersten Fluidführungspaar der zweiten Anschlusskomponente in Fluidverbindung stehen, und einer zweiten Position, in der die Fluidführungen der ersten Anschlusskomponente mit dem zweiten Fluidführungspaar der zweiten Anschlusskomponente in Fluidverbindung stehen, und die Verteileinheit ist dicht mit der ersten und der zweiten Anschlusskomponente verbunden, wobei die erste und zweite Anschlusskomponente über mindestens ein lösbares Befestigungsmittel miteinander verbunden sind.

Der Erfindung liegt die Erkenntnis zugrunde, dass alleine durch die Überführung der Verteileinheit zwischen der ersten und zweiten Position, ein Fluidstrom zur Betätigung eines Antriebszylinders umgeleitet wird, ohne dass die erste und zweite Anschlusskomponente und ggf. weitere daran angeschlossene Fluidführungen bewegt oder neu montiert werden müssen. Die erfindungsgemäße Umschalteinrichtung erlaubt somit eine Umschaltung von stangenseitigem auf bodenseitigen Betrieb und andersrum innerhalb sehr kurzer Zeit, ohne zusätzlichen Montageaufwand oder den Einsatz von speziell geschultem Personal. Zunächst werden einige Begriffe erläutert.

Unter einer Fluidführung ist jegliche Art einer Fluidleitung zu verstehen, die geeignet ist ein Fluid, wie ein unter Druck stehendes Hydraulikmittel, zu führen. In der einfachsten Form ist die Fluidführung eine Bohrung, die beispielsweise als Druckmittelleitung fungiert. Als Fluidführung werden auch flexible oder weniger flexible Druckschläuche bezeichnet. Der Begriff Fluidführungspaar ist funktionell zu verstehen und beschreibt zwei Fluidführungen, die getrennt voneinander sind aber zu einem gemeinsamen Zweck verschaltet werden.

Eine Anschlusskomponente kann eine beliebige Form aufweisen und ist derart ausgebildet, dass sie eine oder mehrere Fluidführungen beherbergt. Die Anschlusskomponenten bilden den äu-ßeren Teil der Umschalteinrichtung und können Anschlüsse für Druckmittelschläuche aufweisen. Es ist möglich, die Anschlusskomponenten als Anschlussplatten oder Anschlussblöcke auszubilden, die ggf. an einer Außenseite fest montierte Anschlüsse für Druckmittelschläuche vorsehen.

Zwischen den Anschlusskomponenten ist eine Verteileinheit angeordnet. Diese kann ebenfalls eine beliebige Form aufweisen, es ist jedoch vorteilhaft, dass die Verteileinheit bündig an der ersten und zweiten Anschlusskomponenten anliegt. Die Verteileinheit kann dann in einer Sandwichstruktur zwischen den Anschlusskomponenten fixiert werden. Die Verteileinheit ist dazu ausgelegt, selektiv eine Fluidverbindung zwischen Fluidführungen der ersten und zweiten Anschlusskomponente herzustellen. Dazu kann die Verteileinheit ebenfalls Fluidführungen aufweisen.

Unter einer reversiblen Überführung der Verteileinheit zwischen einer ersten und zweiten Position ist jede Änderung der Position, Ausrichtung oder Lage der Verteileinheit zu verstehen. Die Überführung kann manuell, elektrisch, hydraulisch oder pneumatisch ausgeführt werden.

In der ersten Position der Verteileinheit stehen die Fluidführungen der ersten Anschlusskomponente mit dem ersten Fluidführungspaar der zweiten Anschlusskomponente in Fluidverbindung. In der zweiten Position der Verteileinheit stehen die Fluidführungen der ersten Anschlusskomponente mit dem zweiten Fluidführungspaar der zweiten Anschlusskomponente in Fluidverbindung. In beiden Fällen kann ein Fluid über die Umschalteinrichtung zu einem Antriebszylinder übertragen werden, jedoch über unterschiedliche Ausgänge. Durch die Umschaltung von einem ersten Fluidführungspaar zu einem zweiten Fluidführungspaar kann beispielsweise die Antriebsseite von der Stangenseite auf die Bodenseite der Antriebszylinder verlegt werden.

Die Erfindung ermöglicht eine Umschaltung des Hydraulikflusses mit einfachen mechanischen Mittel, insbesondere ohne die Verwendung kostenintensiver hydraulischer und elektrischer Ventile. Ferner bleibt eine Position der Anschlusskomponenten bei einer Umschaltung des Hydraulikflusses unverändert. Dies hat den Vorteil, dass keine der Anschlusskomponenten und daran angeschlossener Komponenten vollständig abgeschraubt oder gedreht werden muss. Es kommt somit während des Umschaltens nicht zu einem Auslaufen von Hydrauliköl und es können auch keine Verunreinigungen in das Hydrauliksystem gelangen, da die Fluidführungen nicht frei zugänglich sind.

Vorzugsweise ist die Verteileinheit durch Rotation oder Translation zwischen der ersten und zweiten Position überführbar. Die Verteileinheit dreht sich dabei vorzugsweise um eine zentrale Achse oder wird lateral verschoben. Die Überführung kann manuell durch einen Bediener oder elektrisch erfolgen und ist reversibel.

Weiter vorzugsweise ändert sich bei einer Überführung der Verteileinheit zwischen der ersten und zweiten Position, eine Position der ersten und zweiten Anschlusskomponente nicht. Die stationären Anschlusskomponenten samt etwaiger an diese angeschlossene Fluidführungen (z.B. Druckschläuche) werden von der Umschaltung somit nicht beeinflusst und müssen nicht dementsprechend ausgelegt werden.

In einer vorteilhaften Ausführungsform weist die Verteileinheit eine erste Dichtfläche zum Zusammenwirken mit einer

Dichtfläche der ersten Anschlusskomponente und/oder eine zweite Dichtfläche zum Zusammenwirken mit einer Dichtfläche der zweiten Anschlusskomponente auf. Durch das Zusammenwirken der Dichtflächen ist gewährleistet, dass die Umschalteinrichtung während des Umschaltens dicht ist (auch bei hohen Drücken in der Fluidführung). Die Dichtflächen können durch Dichtungsringe (z.B. O-Ringe) ausgebildet sein.

Die erste und zweite Anschlusskomponente können federnd miteinander verbunden sein, so dass sichergestellt wird, dass während des Umschaltvorgangs kein Fluid zwischen Spalten der Verteileinheit und der Anschlusskomponenten austritt.

Die erste und zweite Anschlusskomponente **sind** über mindestens ein lösbares Befestigungsmittel miteinander verbunden.

Bei dem Befestigungsmittel kann es sich beispielsweise um eine Schraube handeln. Dadurch können die Anschlusskomponenten derart aneinander fixiert werden, dass sie die Verteileinheit zwischen sich einklemmen. Eine auf die Verteileinheit wirkende Klemmkraft zwischen den Anschlusskomponenten kann über das Befestigungsmittel eingestellt werden. Während des Betriebs der Hydraulikpumpe sollte das Befestigungsmittel die Anschlusskomponenten fest fixieren, während das Befestigungsmittel bei einer Überführung der Verteileinheit leicht gelöst werden sollte, damit die Verteileinheit etwas Spiel hat. Aufgrund der Geometrie der Umschalteinrichtung kann es vorteilhaft sein, mehrere Befestigungsmittel in einer symmetrischen Anordnung zu verwenden, um eine homogene Verteilung der Kräfte zu erreichen.

Die erste und zweite Anschlusskomponente können über ein federnd gelagertes Befestigungselement derart miteinander verbunden sein, dass die Verteileinheit dicht mit der ersten und zweiten Anschlusskomponente verbunden ist. Bspw. durch die Verwendung einer Feder mit vorbekannter Federkonstante werden die Anschlussplatten stets mit einer Kraft zusammengehalten, was gewährleistet, dass kein Fluid zwischen der jeweiligen Anschlusskomponente und der Verteileinheit austreten kann. Dies ist besonders wichtig, wenn das Befestigungsmittel leicht gelöst wird, um die Verteileinheit in eine andere Position zu überführen, aber gleichzeitig die Fluidführungen mit Fluid gefüllt sind und ein Auslaufen zu vermeiden ist. Unter dem Begriff des federnd gelagerten Befestigungselement ist jegliche Art von Verbindungsmittel zu verstehen, das eine federnd dichte Verbindung der Anschlusskomponenten mit der Verteileinheit gewährleistet. So könnte das Befestigungselement bspw. auch als Abstandhalter ausgebildet sein, der sicherstellt, dass sich beim Öffnen der Befestigungselemente nur ein definierter Spalt zwischen Anschlusskomponenten und Verteileinheit ergeben kann, der durch entsprechende (federnde) Dichtungen ausgeglichen wird.

In einer vorteilhaften Ausführungsform sind das Befestigungsmittel und/oder das federnd gelagerte Befestigungselement als Führungshilfe bei der Überführung der Verteileinheit ausgebildet. Das Befestigungsmittel und/oder das federnd gelagerte Befestigungselement können beispielsweise eine Mittelachse vorgeben, um die das Verteilelement rotiert. Dazu ist das Befestigungsmittel und/oder Befestigungselement durch eine Ausnehmung in der Verteileinheit geführt. Die Ausnehmung kann auch in Form eines Langlochs ausgebildet sein, was eine laterale Verschiebung der Verteileinheit entlang des Langlochs erlaubt.

Die erste und/oder zweite Anschlusskomponente kann ein Führungselement für die Überführung der Verteileinheit zwischen der ersten und zweiten Position aufweisen. Das Führungselement kann beispielsweise in Form einer Nut ausgebildet sein, in die ein Vorsprung der Verteileinheit eingreift, oder andersrum.

Die Nut kann beispielsweise in abgesetzter Form, kreisförmig oder geradlinig verlaufen.

Vorzugsweise ist die Umschalteinrichtung so ausgebildet, dass die Verteileinheit einen Bedienhebel für die Überführung zwischen der ersten und zweiten Position aufweist. Weiter vorzugsweise wirkt der Bedienhebel mit einem Führungselement der ersten oder zweiten Anschlusskomponente zusammen. Über den Bedienhebel kann die Verteileinheit manuell von einem Bediener beispielsweise gedreht oder verschoben werden. Dazu kann der Bedienhebel durch eine Ausnehmung in einer der Anschlusskomponenten geführt sein. Über die Stellung des Bedienhebels kann auch die Einstellung in der sich die Umschalteinrichtung befindet, angezeigt werden.

Die Verteileinheit kann auf einer der zweiten Anschlusskomponente zugewandten Seite wenigstens vier Öffnungen zur Verbindung mit dem ersten und zweiten Fluidführungspaar aufweisen.

In einer vorteilhaften Ausführungsform ist das jeweils nicht mit den Fluidführungen der ersten Anschlusskomponente in Fluidverbindung stehende Führungspaar der zweiten Anschlusskomponente kurzgeschlossen. Das zweite Fluidführungspaar kann somit vorzugsweise als Schaukelölleitung eingesetzt werden. Der Kurzschluss erfolgt vorzugsweise über eine Fluidführung in der Verteileinheit.

Vorzugsweise sind an die erste Anschlusskomponente zwei Druckschläuche montiert und/oder an der zweiten Anschlusskomponente vier Druckschläuche montiert. Die Druckschläuche können speziell auf die Position der Umschalteinrichtung ausgelegt werden und müssen nicht für eine Verlegung oder Ummontage ausgebildet sein.

In einer bevorzugten Ausführungsform der Umschalteinrichtung erfolgt die Positionsbestimmung der Verteileinheit anhand eines Sensors. Bei dem Sensor kann es sich beispielsweise um einen optischen, induktiven oder mechanischen Positionssensor handeln oder um einen innerhalb der Fluidführungen angeordneten Drucksensor. Mithilfe des Sensors kann dem Bediener signalisiert werden, in welcher Position sich die Verteileinheit befindet und ggf. ob sich die Verteileinheit in einem undefinierten Zwischenzustand befindet.

Die Erfindung betrifft außerdem eine Betonpumpe mit einer Umschalteinrichtung. Über die Umschalteinrichtung kann die Antriebsseite der hydraulisch angetriebenen Betonpumpe von der Stangenseite auf die Bodenseite verlegt werden.

Die Erfindung betrifft ferner ein Verfahren zur Umschaltung eines Hydraulikmittelflusses einer Betonpumpe mit einer Umschalteinrichtung, mit den Schritten:
- Lösen eines zwischen der ersten und zweiten Anschlusskomponente angeordneten Befestigungsmittels oder federnd gelagerten Befestigungselements;
- Überführen einer Verteileinheit zwischen einer ersten und zweiten Position;
- Festziehen des Befestigungsmittels oder des federnd gelagerten Befestigungselements.

Das Verfahren zur Umschaltung eines Hydraulikmittelflusses einer Betonpumpe ermöglicht eine Verlegung der Antriebsseite des Antriebszylinders zwischen Stangenseite und Bodenseite mit einfachen mechanischen Mitteln und ohne aufwändige Montagearbeiten. Während des Betriebs sind die Befestigungsmittel fest anzuziehen, damit den Umschalteinrichtung dicht bleibt und den in den Fluidführungen herrschenden hohen Drücken Stand halten kann. Während des Überführens der Verteileinheit, benötigt diese etwas Spiel, um beispielsweise eine Drehung oder Verschiebung durchzuführen. Jedoch sollten die Anschlusskomponenten stets so auf die Verteileinheit einwirken, dass kein Fluid aus der Umschalteinrichtung austreten kann.

Das erfindungsgemäße Verfahren kann mit weiteren im Zusammenhang mit der erfindungsgemäßen Umschalteinrichtung beschriebenen Merkmalen fortgebildet werden. Die erfindungsgemäße Umschalteinrichtung kann mit weiteren im Zusammenhang mit dem erfindungsgemäßen Verfahren beschriebenen Merkmalen fortgebildet werden.

Vorteilhafte Ausführungsformen der Erfindung werden nachfolgend anhand der beigefügten Figuren beispielhaft beschrieben. Es zeigen:
- Figur 1:: Ein systematisches Schaltbild einer Stangen-Boden-Umschaltung mit einer erfindungsgemäßen Umschalteinrichtung in einer ersten Ausführungsform;
- Figur 2:: eine dreidimensionale schematische Darstellung einer Umschalteinrichtung gemäß der ersten Ausführungsform;
- Figur 3:: eine dreidimensionale schematische Darstellung der Umschalteinrichtung aus Fig. 2 aus einer anderen Perspektive;
- Figur 4:: eine schematisch funktionale Ansicht der Umschalteinrichtung gemäß der ersten Ausführungsform in einer ersten Position;
- Figur 5:: eine schematisch funktionale Ansicht der Umschalteinrichtung aus Fig. 4 in einer zweiten Position;
- Figur 6:: eine dreidimensionale schematische Darstellung hydraulisch angetriebener Antriebszylinder einer Betonpumpe (nicht dargestellt) mit einer Umschalteinrichtung gemäß der ersten Ausführungsform;
- Figur 7:: eine dreidimensionale schematische Ansicht einer erfindungsgemäßen Umschalteinrichtung gemäß einer zweiten Ausführungsform;
- Figur 8:: eine dreidimensionale schematische Darstellung hydraulisch angetriebener Antriebszylinder einer Betonpumpe (nicht dargestellt) mit einer Umschalteinrichtung gemäß der zweiten Ausführungsform;
- Figur 9:: eine schematisch funktionale Ansicht der Umschalteinrichtung gemäß der zweiten Ausführungsform in einer ersten Position; und
- Figur 10:: eine schematisch funktionale Ansicht der Umschalteinrichtung gemäß Figur 9 in einer zweiten Position.

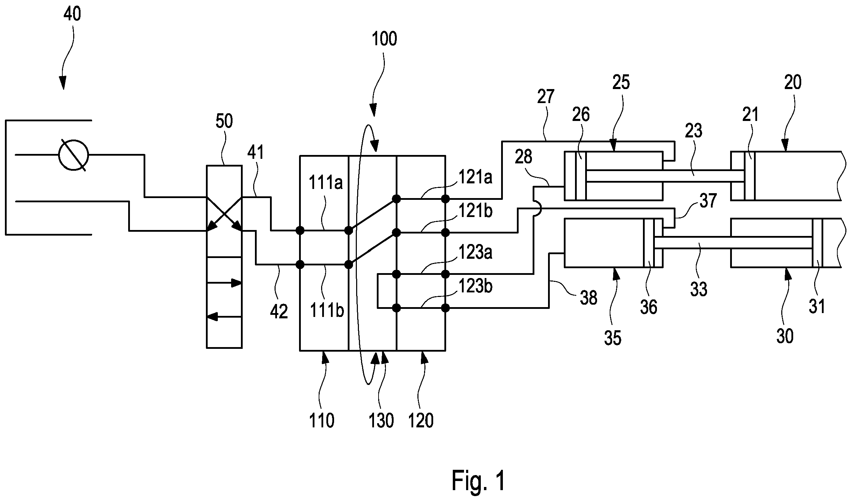

Figur 1 zeigt ein schematisches Schaltbild zweier hydraulisch angetriebener Förderzylinder 20, 30 einer Betonpumpe (nicht dargestellt). Es handelt sich vorzugsweise um eine stationäre Betonpumpe. Die Kolben 21, 31 der Förderzylinder 20, 30 werden durch hydraulische Antriebszylinder 25, 35 hin- und hergeschoben, deren Kolben 26, 36 über Kolbenstangen 23, 33 mit den Kolben 21, 31 der Förderzylinder 20, 30 verbunden sind. Das Verschieben der Kolben 26, 36 der Antriebszylinder 25, 35 erfolgt durch abwechselnde Druckmittelbeaufschlagung der kolbenstangenseitigen Druckräume der Antriebszylinder 25, 35 über die dargestellten Druckmittelleitung 27, 37. Die den Vollflächen der Kolben 26, 36 zugewandten Druckräume der Antriebszylinder 25, 35 sind durch Druckmittelleitungen 28, 38 nach Art eines hydraulischen Gestänge verbunden. Sämtliche Druckmittelleitungen 27, 37, 28, 38 sind durch eine Umschalteinrichtung 100 geführt, welche in Figur 1 stark vereinfacht zur Verdeutlichung ihrer Anordnung dargestellt ist.

Wie sich der symbolischen Darstellung der Umschalteinrichtung 100 entnehmen lässt, kann eine zwischen einer ersten und zweiten Anschlusskomponente 110, 120 angeordnete Verteileinheit 130 durch Verdrehen um ihre Achse um 180° in zwei Positionen eingestellt werden. In einer ersten Position (gemäß Figur 1) sind die Druckmittelleitungen 27, 37 mit zur Druckmittelzufuhr und Druckmittelabfuhr dienenden Druckmittelleitungen 41, 42 verbunden, während die Druckmittelleitungen 28, 38 zu einem hydraulischen Gestänge verbunden sind (stangenseitiger Betrieb). In einer zweiten Position (nicht in Figur 1 dargestellt) sind die Druckmittelleitungen 28, 38 an die Druckmittelleitungen 41, 42 zur Druckmittelzufuhr und -abfuhr angeschlossen, während die Druckmittelleitungen 27, 37 zu einem hydraulischen Gestänge verbunden sind (bodenseitiger Betrieb). Zur abwechselnden Druckbeaufschlagung und Druckentlastung der Druckmittelleitungen 41, 42 kann ein Umsteuerventil 50 vorgesehen sein. Bei einer fahrbaren Betonpumpe mit Freiflusshydraulik-Steuerung (FFH) ist ein solches Umsteuerventil 50 jedoch nicht erforderlich. Eine Druckmittelpumpe ist mit dem Bezugszeichen 40 gekennzeichnet.

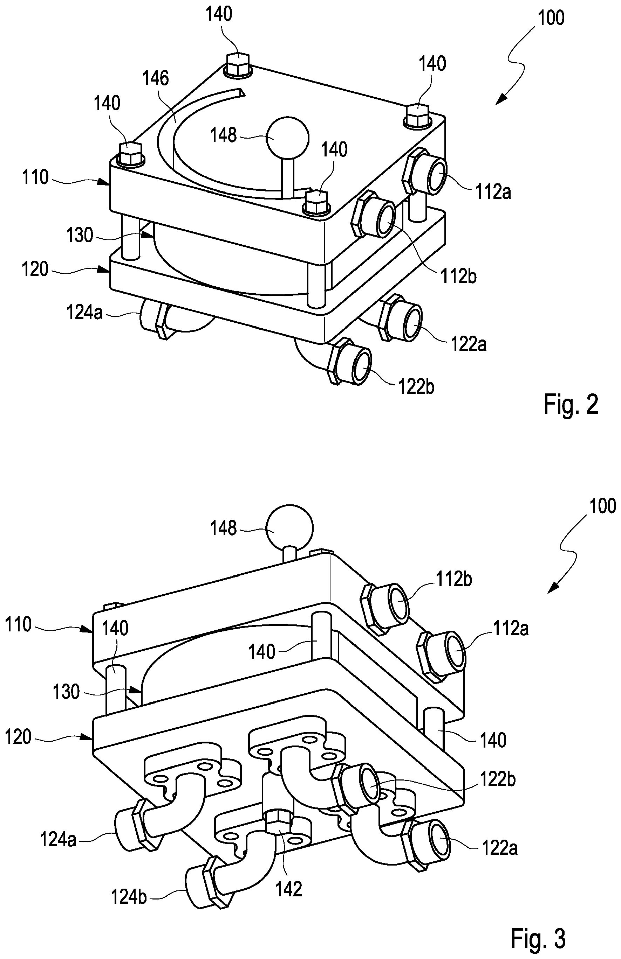

In den Figuren 2-6 bzw. 7-10 sind ein erstes bzw. zweites Ausführungsbeispiel der Umschalteinrichtung 100 bzw. 200 im Detail dargestellt.

In den Figuren 2 und 3 ist eine dreiteilige Umschalteinrichtung 100 gemäß einer ersten Ausführungsform in zwei verschiedenen Perspektiven gezeigt. Die Umschalteinrichtung 100 umfasst eine erste Anschlusskomponente 110 und eine zweite Anschlusskomponente 120. Zwischen den Anschlusskomponenten 110, 120 ist eine Verteileinheit 130 angeordnet. Die Verteileinheit 130 ist sandwichartig zwischen den Anschlusskomponenten 110, 210 eingeklemmt. Alle drei Komponenten der Umschalteinrichtung sind im Wesentlichen plattenförmig mit gleich langen Seitenkanten ausgebildet, dies ist jedoch keinesfalls zwingend.

Die erste Anschlusskomponente 110 weist auf ihrer Außenseite sichtbar zwei Anschlüsse für Druckschläuche 112a, 112b auf, welche mit nicht dargestellten Fluidführungen innerhalb der ersten Anschlusskomponente 110 in Verbindung stehen. Die zweite Anschlusskomponente 120 weist auf ihrer Außenseite vier Anschlüsse für Druckschläuche 122a, 122b, 124a, 124b mit sogenannten Winkelverschraubungen auf, welche ebenfalls mit nicht dargestellten Fluidführungen in der zweiten Anschlusskomponente 120 in Verbindung stehen. Die Fluidführungen der ersten und zweiten Anschlusskomponente 110, 120 sind durch die Verteileinheit 130 voneinander getrennt, wie nachfolgend genauer beschrieben ist.

Die Umschalteinrichtung 100 weist in dieser Ausführungsform vier in den Ecken angeordnete Befestigungsmittel 140 in Form von Schrauben auf. Die Befestigungsmittel 140 verbinden die erste und zweite Anschlusskomponente 110, 120 miteinander und können so stark angezogen werden, dass die Verteileinheit 130 sicher bzw. dicht zwischen den Anschlusskomponenten 110, 120 eingespannt ist. Zusätzlich weist die Umschalteinrichtung 100 ein zentral angeordnetes federnd gelagertes Befestigungselement 142 auf. Das Befestigungselement 142 ist als Kombination von Schraube und Feder ausgestaltet und bewirkt, dass die erste und zweite Anschlusskomponente 110, 120 auch nach einem teilweisen Lösen der Befestigungsmittel 140 durch die Kraft der Feder weiterhin zusammengedrückt werden. Auf diese Weise kann ein Fluid, wie ein Hydraulikmittel, nicht ungewollt aus der Umschalteinrichtung 100 austreten.

Um die Verteileinheit 130 von einer ersten Position in eine zweite Position zu überführen, müssen zunächst die Befestigungsmittel 140 leicht gelöst werden, damit die Verteileinheit nicht mehr zwischen Anschlusskomponenten 110, 120 fixiert ist. Die Verteileinheit 130 weist auf ihrer der ersten Anschlusskomponente 110 zugewandten Seite einen Bedienhebel 148 auf. Anstelle einer mechanischen Betätigung der Verteileinheit 130 ist auch eine elektrische, hydraulische oder pneumatische Betätigung möglich. Der Bedienhebel 148 kann entlang eines als Teil einer der Anschlusskomponenten 110, 120 ausgebildeten Führungselements 146 geführt werden. Durch die Bewegung des Bedienhebels 148 entlang des Führungselements 146 kann die Verteileinheit 130 um bis zu 180° gedreht werden.

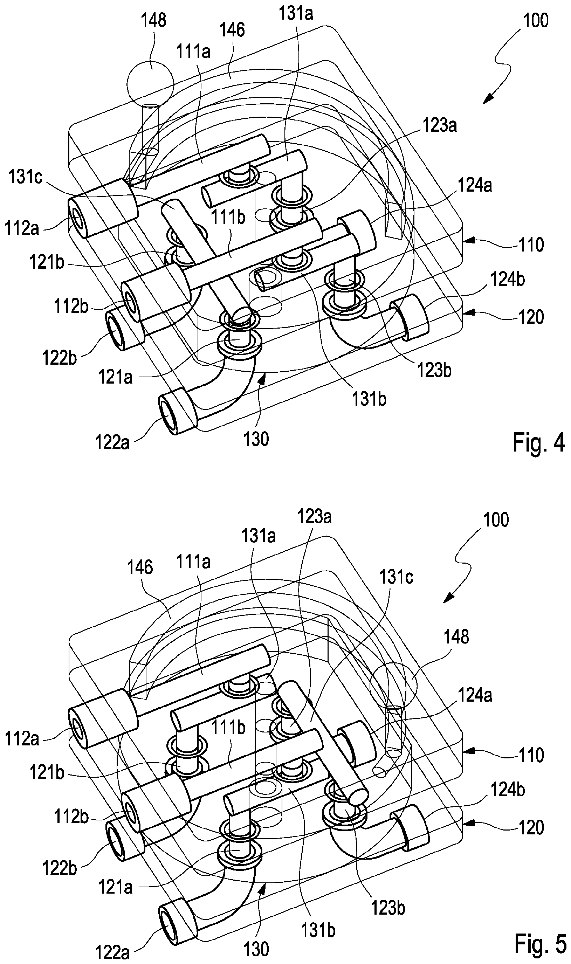

In den Figuren 4 und 5 ist die Umschalteinrichtung 100 in einer ersten und einer zweiten Position gezeigt. Die unterschiedliche Ausrichtung der Verteileinheit 130 lässt sich insbesondere auch anhand der unterschiedlichen Position des Bedienhebels 148 ablesen. Die Figuren 4 und 5 zeigen die im Inneren der Anschlusskomponenten 110, 120 sowie der Verteileinheit 130 angeordneten Fluidführungen. Die erste Anschlusskomponente 110 weist Fluidführungen 111a und 111b auf, welche mit den Anschlüssen für Druckschläuche 112a, 112b verbunden sind.

Die zweite Anschlusskomponente 120 weist vier Fluidführungen 121a, 121b, 123a, 123b auf, welche mit den Anschlüssen für Druckschläuche 122a, 122b, 124a, 124b verbunden sind. Die Fluidführungen 121a, 121b bzw. 123a, 123b werden jeweils als Fluidführungspaar bezeichnet. Die Fluidführungen 111a, 111b, 121a, 121b, 123a, 123b verlaufen als Bohrungen im Inneren der Anschlusskomponenten 110, 120.

Die Verteileinheit 130 weist in dieser Ausführungsform drei Fluidführungen 131a, 131b, 133c auf, welche je nach Position der Verteileinheit 130, Fluidverbindungen zwischen unterschiedlichen Fluidführungen der ersten und zweiten Anschlusskomponente 110, 120 bewirken. In diesem Ausführungsbeispiel sind die Fluidführungen der Verteileinheit als Bohrungen ausgebildet, die geeignet sind ein Druckmittel zu transportieren. Zusätzlich sind die Fluidführungen 131a, 131b, 133c an der Außenseite der Verteileinheit 130 mit Dichtringen ausgestattet.

Die Fluidführung 131a der Verteileinheit 130 verbindet Fluidführung 122b der ersten Anschlusskomponente 110 mit Fluidführung 123b der zweiten Anschlusskomponente 120. Die Fluidführung 131b der Verteileinheit 130 verbindet Fluidführung 112a der ersten Anschlusskomponente 110 mit Fluidführung 123a der zweiten Anschlusskomponente 120. Die Fluidführungen 123a, 123b gehören zu einem Fluidführungspaar. Fluidführung 131c verbindet die Fluidführungen 121a und 121b der zweiten Anschlusskomponente 120 und schließt somit das Fluidführungspaar 121a, 121b kurz.

Bewegt ein Bediener den in der Figur 4 dargestellten Bedienhebel 148 entlang des Führungselements 146 der ersten Anschlusskomponente 110, ergibt sich die in Figur 5 dargestellte Einstellung. Die Verteileinheit 130 führt dabei eine Rotation von 180° um ihre eigene Achse durch. Diese zentrale Achse ist in dieser Ausführungsform durch das federnd gelagerte Befestigungselement 142 bestimmt, welches durch eine Ausnehmung in der Verteileinheit 130 geführt ist. Die Fluidführung 131c verbindet in dieser Einstellung das durch die Fluidführungen 123a und 123b gebildete Fluidführungspaar der zweiten Anschlusskomponente 120, während die Fluidführungen 131a und 131b jeweils eine Fluidführung 112a, 112b der ersten Anschlusskomponente 110 mit einer Fluidführung 21a, 121b der zweiten Anschlusskomponente 120 verbinden. Durch die Überführung der Verteileinheit 130 von der ersten in die zweite Position lässt sich somit die Betriebsart zwischen den Fluidführungspaaren umschalten. Auf diese Weise kann ein Bediener ohne nennenswerten Montageaufwand und in kurzer Zeit die Maschine von einem stangenseitigen Betrieb auf bodenseitigen Betrieb bzw. von bodenseitigem Betrieb auf stangenseitigen Betrieb umschalten.

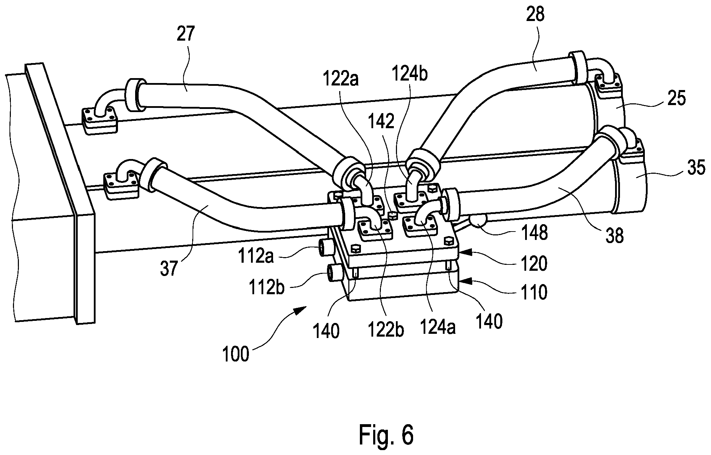

Figur 6 zeigt die Umschalteinrichtung 100 mit fest angeschlossenen Druckmittelleitungen 27, 37, 28, 38 in Form von Druckschläuchen. Die Druckschläuche verbinden die Druckschlauch-Anschlüsse 122a, 122b, 124a, 124b der zweiten Anschlusskomponente 120 mit der Stangenseite bzw. Bodenseite der Antriebszylinder 25, 35 (siehe auch Figur 1) der Aufbau der Umschalteinrichtung 100 ist ansonsten wie voranstehend beschrieben. Die Umschalteinrichtung 100 kann an jeder Stelle der Maschine angeordnet werden, beispielsweise an jeder Stelle entlang der Antriebszylinder 25, 35.

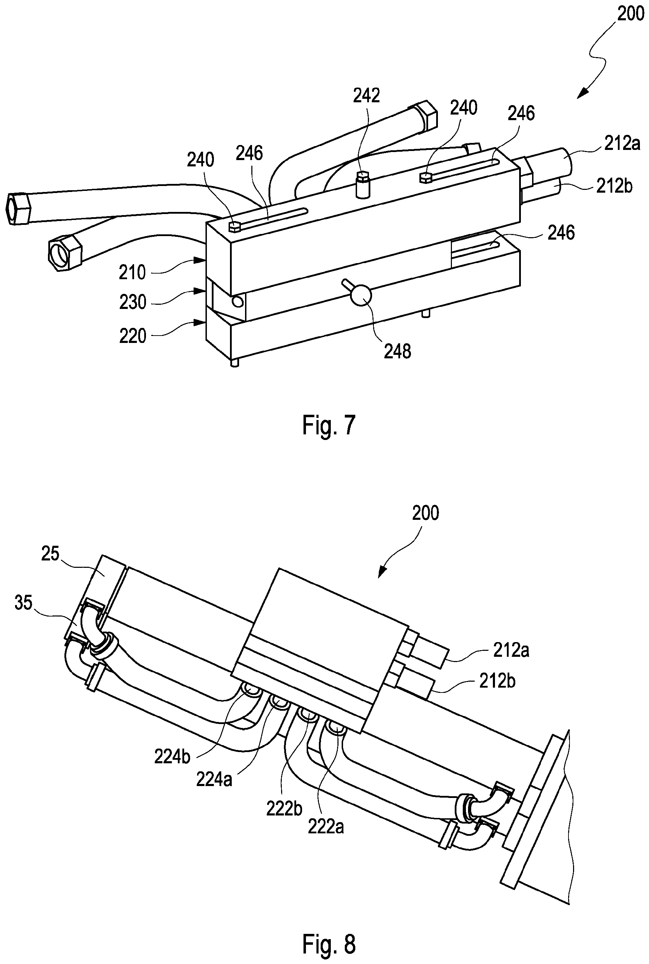

In der Figur 7 ist eine dreiteilige Umschalteinrichtung 200 gemäß einem zweiten Ausführungsbeispiel der Erfindung gezeigt. Die Umschalteinrichtung 200 umfasst eine erste Anschlusskomponente 210, eine zweite Anschlusskomponente 220 und eine zwischen der ersten und zweiten Anschlusskomponente 210, 220 angeordnete Verteileinheit 230. Die Umschalteinrichtung 200 unterscheidet sich von der Umschalteinrichtung 100 dadurch, dass die reversible Überführung der Verteileinheit 230 zwischen einer ersten Position und einer zweiten Position durch eine laterale Verschiebung der Verteileinheit 130 ausgeführt wird. Die Verschiebung der Verteileinheit 130 kann ebenfalls über einen Bedienhebel 248 erfolgen.

Die erste und zweite Anschlusskomponente 210, 220 weisen jeweils Anschlüsse für Druckschläuche 212a, 212b, 22a, 22b, 224a, 224b auf. Die erste und zweite Anschlusskomponente 210, 220 sind zudem über Befestigungsmittel 240 in Form von Schrauben miteinander verbunden und weisen zusätzlich ein federnd gelagertes Befestigungselement 242 in Form einer Kombination aus Feder und Schraube auf. Die Befestigungsmittel 240 sind in Langlöchern der ersten und zweiten Anschlusskomponente 210, 220 angeordnet, welche als Führungselemente 246 bei einer Verschiebung der Verteileinheit 130 dienen. Die Verteileinheit 230 befindet sich in der ersten und zweiten Position jeweils vollständig zwischen der ersten und zweiten Anschlusskomponente 210, 220 und ist zwischen diesen eingeklemmt.

In der Figur 8 ist die Umschalteinrichtung 200 mit an der zweiten Anschlussplatte 230 fest an die Druckanschlüsse 222a, 222b, 224a, 244b angeschlossenen Druckschläuchen gezeigt. Die Druckschläuche verbinden die Druckanschlüsse 222a, 222b, 224a, 244b mit der Stangenseite bzw. Bodenseite der Antriebszylinder 25, 35. Die Umschalteinrichtung 200 kann an beliebiger Stelle an der Maschine, beispielsweise entlang der Antriebszylinder 25, 35, angeordnet sein.

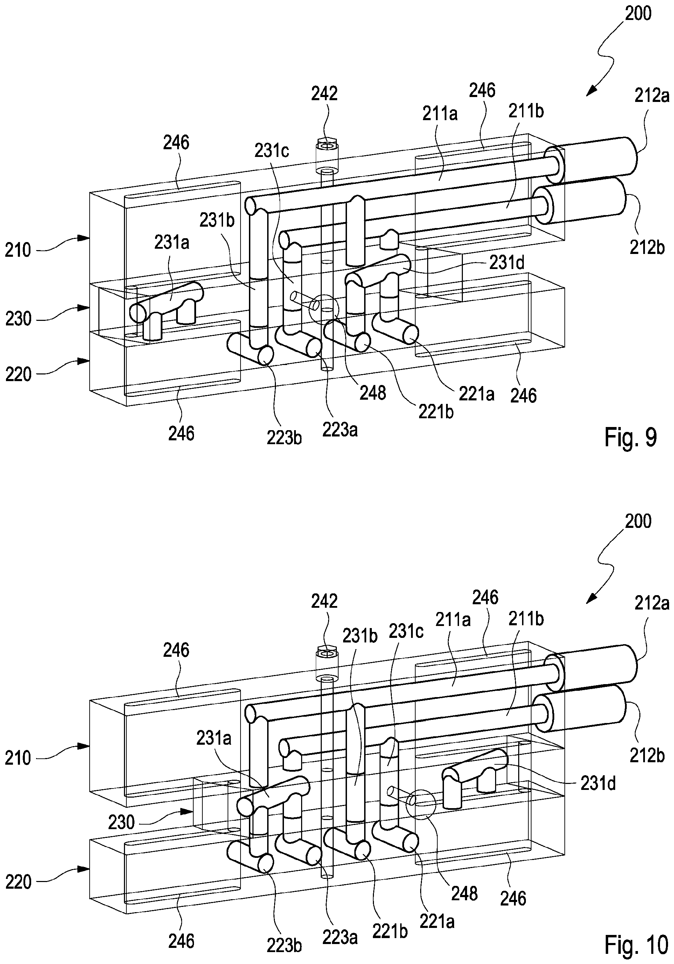

In den Figuren 9 und 10 ist die Umschalteinrichtung 200 in einer ersten und einer zweiten Position gezeigt. Die unterschiedliche Position der Verteileinheit 130 ist dadurch gekennzeichnet, dass die Verteileinheit 130 in eine im Wesentlichen horizontale Richtung in Richtung der Druckanschlüsse 212a, 212b verschoben ist. In der in Figur 9 gezeigten Einstellung steht eine erste Fluidführung 211a der ersten Anschlusskomponente 210 über Fluidführung 231b der Verteileinheit 230 in Verbindung mit Fluidführung 223b der zweiten Anschlusskomponente 230 und eine zweite Fluidführung 211b der ersten Anschlusskomponente 210 steht über Fluidführung 231c der Verteileinheit 230 in Fluidverbindung mit Fluidführung 223a der zweiten Anschlusskomponente 220. Die Fluidführungen 221a und 221b der zweiten Anschlusskomponente 220 stehen beide in Kontakt mit Fluidführung 231d der Verteileinheit 230 und sind somit über die Verteileinheit 230 kurzgeschlossen (hydraulisches Gestänge). Die Fluidführungen 223a und 223b gehören zu einem Fluidführungspaar.

In der in der Figur 10 dargestellten Einstellung steht die Fluidführung 211a der ersten Anschlusskomponente 210 über die Fluidführung 231b der Verteileinheit 230 in Fluidverbindung mit Fluidführung 221b der zweiten Anschlusskomponente 220. Die zweite Fluidführung 221b der ersten Anschlusskomponente 210 steht über Fluidführung 231c der Verteileinheit 230 in Fluidverbindung mit der Fluidführung 221a der zweiten Anschlusskomponente 220. Sämtliche Fluidführungen sind als Bohrungen ausgebildet, wobei die Fluidführungen 211a, 211b der ersten Anschlusskomponente Verzweigungen mit mehreren zueinander versetzten Ausgängen aufweisen. Dies ist jedoch unproblematisch, da die Anschlusskomponenten 210, 220 über das federnd gelagerte Befestigungselement 240 und etwaige Dichtungselemente (nicht dargestellt) stets so zusammengehalten werden, dass die Umschalteinrichtung 200 dicht ist.

Für die Durchführung des Verfahren zur Umschaltung eines Hydraulikflusses einer Betonpumpe mit einer Umschalteinrichtungen 100, 200 werden zunächst die Befestigungsmittel 140, 240 (oder das federnd gelagerte Befestigungselement 142, 242) leicht losgeschraubt ohne jedoch die Verbindung zwischen der ersten und zweiten Anschlusskomponente 110, 120, 210, 220 zu lösen. Dies ermöglicht der Verteileinheit 130, 230 ausreichend Spiel, um eine Rotation oder Translation zwischen den Anschlusskomponenten zu ermöglichen. Sobald die finale Position der Verteileinheit 230 erreicht ist, schraubt ein Bediener die Befestigungsmittel 140, 240 (oder das federnd gelagerte Befestigungselement) wieder fest, bevor die Umschalteinrichtung 100, 200 im Betrieb verwendet werden kann.

## Patentansprüche

1. Umschalteinrichtung (100, 200) zur Umschaltung eines Hydraulikflusses einer Betonpumpe, mit einer ersten Anschlusskomponente (110, 210) zur Verbindung mit einer Hydraulikpumpe (40), einer zweiten Anschlusskomponente (120, 220) zur Verbindung mit einem Antriebszylinder (25, 35) und einer zwischen der ersten und zweiten Anschlusskomponente (110, 210, 120, 220) angeordneten Verteileinheit (130, 230),
wobei die erste Anschlusskomponente (110, 210) zwei Fluidführungen (111a, 111b, 211a, 211b) aufweist und die zweite Anschlusskomponente (120, 220) ein erstes Fluidführungspaar (121a, 121b, 221a, 221b) und ein zweites Fluidführungspaar (123a, 123b, 223a, 223b) aufweist, und die Verteileinheit (130, 230) reversibel überführbar ist zwischen einer ersten Position, in der die Fluidführungen (111a, 111b, 211a, 211b) der ersten Anschlusskomponente (110, 210) mit dem ersten Fluidführungspaar (121a, 121b, 221a, 221b) der zweiten Anschlusskomponente (120, 220) in Fluidverbindung stehen, und einer zweiten Position, in der die Fluidführungen (111a, 111b, 211a, 211b) der ersten Anschlusskomponente (110, 210) mit dem zweiten Fluidführungspaar (123a, 123b, 223a, 223b) der zweiten Anschlusskomponente (120, 220) in Fluidverbindung stehen,
**dadurch gekennzeichnet, dass**
die Verteileinheit (130, 230) dicht mit der ersten und der zweiten Anschlusskomponente (110, 120, 210, 220) verbunden ist, und
dadurch, dass
die erste und zweite Anschlusskomponente (110, 120, 210, 220) über mindestens ein lösbares Befestigungsmittel (140, 240) miteinander verbunden sind.

2. Umschalteinrichtung (100, 200) nach Anspruch 1, bei der die Verteileinheit (130, 230) durch Rotation oder Translation zwischen der ersten und zweiten Position überführbar ist.

3. Umschalteinrichtung (100, 200) nach Anspruch 1 oder 2, bei der bei einer Überführung der Verteileinheit (130, 230) zwischen der ersten und zweiten Position eine Position der ersten und zweiten Anschlusskomponente (110, 210, 120, 220) unverändert bleibt.

4. Umschalteinrichtung (100, 200) nach einem der voranstehenden Ansprüche, bei der die Verteileinheit (130, 230) eine erste Dichtfläche zum Zusammenwirken mit einer Dichtfläche der ersten Anschlusskomponente (110, 210) und/oder eine zweite Dichtfläche zum Zusammenwirken mit einer Dichtfläche der zweiten Anschlusskomponente (120, 220) aufweist.

5. Umschalteinrichtung (100, 200) nach einem der voranstehenden Ansprüche, bei der die erste und die zweite Anschlusskomponente (110, 120, 210, 220) federnd miteinander verbunden sind.

6. Umschalteinrichtung (100, 200) nach einem der voranstehenden Ansprüche, bei der die erste und zweite Anschlusskomponente (110, 120, 210, 220) derart miteinander verbunden sind, dass kein Fluid zwischen der ersten bzw. zweiten Anschlusskomponente (110, 120, 210, 220) und der Verteileinheit (130, 230) austreten kann, wenn das mindestens eine lösbare Befestigungsmittel (140, 240) gelöst ist.

7. Umschalteinrichtung (100, 200) nach einem der voranstehenden Ansprüche, bei der die erste und zweite Anschlusskomponente (110, 120, 210, 220) über ein federnd gelagertes Befestigungselement (142, 242) derart miteinander verbunden sind, dass die Verteileinheit (130, 230) dicht mit der ersten und zweiten Anschlusskomponente (110, 120, 210, 220) verbunden ist.

8. Umschalteinrichtung (100, 200) nach einem der voranstehenden Ansprüche, bei der das Befestigungsmittel (140, 240) und/oder das federnd gelagerte Befestigungselement (142, 242) als Führungshilfe bei der Überführung der Verteileinheit (130, 230) zwischen der ersten und zweiten Position ausgebildet ist.

9. Umschalteinrichtung (100, 200) nach einem der voranstehenden Ansprüche, bei der die erste und/oder zweite Anschlusskomponente ein Führungselement (146, 246)) für die Überführung der Verteileinheit (130, 230) zwischen der ersten und zweiten Position aufweist.

10. Umschalteinrichtung (100, 200) nach einem der voranstehenden Ansprüche, bei der die Verteileinheit (130, 230) einen Bedienhebel (148, 248) für die Überführung zwischen der ersten und zweiten Position aufweist, vorzugsweise wirkt der Bedienhebel (148, 248) mit einem Führungselement (146, 246) der ersten oder zweiten Anschlusskomponente (110, 120, 210, 220) zusammen.

11. Umschalteinrichtung (100, 200) nach einem der voranstehenden Ansprüche, bei der die Verteileinheit (130, 230) auf einer der zweiten Anschlusskomponente (120, 220) zugewandten Seite wenigstens vier Öffnungen zur Verbindung mit dem ersten und zweiten Fluidführungspaar (121a, 121b, 221a, 221b, 123a, 123b, 223a, 223b) aufweist.

12. Umschalteinrichtung (100, 200) nach einem der voranstehenden Ansprüche, bei der das jeweils nicht mit einer Fluidführung (111a, 111b, 211a, 211b) der ersten Anschlusskomponente (110, 210) in Fluidverbindung stehende Fluidführungspaar (121a, 121b, 221a, 221b, 123a, 123b, 223a, 223b) der zweiten Anschlusskomponente kurzgeschlossen ist.

13. Umschalteinrichtung (100, 200) nach einem der voranstehenden Ansprüche, bei der an der ersten Anschlusskomponente (110, 210) zwei Druckschläuche (112a, 112b) montiert sind und/oder an der zweiten Anschlusskomponente (120, 220) vier Druckschläuche (122a, 122b, 124a, 124b, 222a, 222b, 224a, 224b) montiert sind, und/oder
bei der die Positionsbestimmung der Verteileinheit (130, 230) anhand eines Sensors erfolgt.

14. Betonpumpe mit einer Umschalteinrichtung (100, 200) ausgebildet nach einem der Ansprüche 1 bis 13.

15. Verfahren zur Umschaltung eines Hydraulikmittelflusses einer Betonpumpe mit einer Umschalteinrichtung (100, 200) ausgebildet gemäß einem der Ansprüche 1 bis 13, mit den folgenden Schritten:
- Lösen eines zwischen einer ersten und zweiten Anschlusskomponente (110, 210, 120, 220) angeordneten Befestigungsmittels (140, 240) oder federnd gelagerten Befestigungselements (142, 242);
- Überführen einer Verteileinheit (130, 230) zwischen einer ersten und zweiten Position;
- Festziehen des Befestigungsmittels (140) oder des federnd gelagerten Befestigungselements (142, 242).

## Claims

1. Switching device (100, 200) for switching a hydraulic flow of a concrete pump, having a first connection component (110, 210) for connection to a hydraulic pump (40), having a second connection component (120, 220) for connection to a drive cylinder (25, 35), and having a distribution unit (130, 230) which is arranged between the first and second connection components (110, 210, 120, 220),
wherein the first connection component (110, 210) has two fluid guides (111a, 111b, 211a, 211b) and the second connection component (120, 220) has a first fluid-guide pair (121a, 121b, 221a, 221b) and a second fluid-guide pair (123a, 123b, 223a, 223b), and the distribution unit (130, 230) can be transferred reversibly between a first position, in which the fluid guides (111a, 111b, 211a, 211b) of the first connection component (110, 210) are connected fluidically to the first fluid-guide pair (121a, 121b, 221a, 221b) of the second connection component (120, 220), and a second position, in which the fluid guides (111a, 111b, 211a, 211b) of the first connection component (110, 210) are connected fluidically to the second fluid-guide pair (123a, 123b, 223a, 223b) of the second connection component (120, 220),
**characterized in that** the distribution unit (130, 230) is connected in a leak-tight manner to the first and second connection components (110, 120, 210, 220),
and **in that** the first and second connection components (110, 120, 210, 220) are connected to one another via at least one releasable fastening means (140, 240).

2. Switching device (100, 200) according to Claim 1, in which the distribution unit (130, 230) can be transferred between the first and second positions by way of rotation or translation.

3. Switching device (100, 200) according to Claim 1 or 2, in which, when the distribution unit (130, 230) is transferred between the first and second positions, a position of the first and second connection components (110, 210, 120, 220) remains unchanged.

4. Switching device (100, 200) according to one of the preceding claims, in which the distribution unit (130, 230) has a first sealing surface for interaction with a sealing surface of the first connection component (110, 210) and/or has a second sealing surface for interaction with a sealing surface of the second connection component (120, 220) .

5. Switching device (100, 200) according to one of the preceding claims, in which the first and second connection components (110, 120, 210, 220) are connected to one another in a resilient manner.

6. Switching device (100, 200) according to one of the preceding claims, in which the first and second connection components (110, 120, 210, 220) are connected to one another in such a way that no fluid can escape between the first or second connection component (110, 120, 210, 220) and the distribution unit (130, 230) when the at least one releasable fastening means (140, 240) is released.

7. Switching device (100, 200) according to one of the preceding claims, in which the first and second connection components (110, 120, 210, 220) are connected to one another via a resiliently mounted fastening element (142, 242) in such a way that the distribution unit (130, 230) is connected in a leak-tight manner to the first and second connection components (110, 120, 210, 220).

8. Switching device (100, 200) according to one of the preceding claims, in which the fastening means (140, 240) and/or the resiliently mounted fastening element (142, 242) are/is configured as a guide aid for the transfer of the distribution unit (130, 230) between the first and second positions.

9. Switching device (100, 200) according to one of the preceding claims, in which the first and/or second connection component has a guide element (146, 246) for the transfer of the distribution unit (130, 230) between the first and second positions.

10. Switching device (100, 200) according to one of the preceding claims, in which the distribution unit (130, 230) has an operating lever (148, 248) for the transfer between the first and second positions, the operating lever (148, 248) preferably interacting with a guide element (146, 246) of the first or second connection component (110, 120, 210, 220).

11. Switching device (100, 200) according to one of the preceding claims, in which the distribution unit (130, 230) has on a side which faces towards the second connection component (120, 220) at least four openings for connection to the first and second fluid-guide pairs (121a, 121b, 221a, 221b, 123a, 123b, 223a, 223b).

12. Switching device (100, 200) according to one of the preceding claims, in which that fluid-guide pair (121a, 121b, 221a, 221b, 123a, 123b, 223a, 223b) of the second connection component which is in each case not connected fluidically to a fluid guide (111a, 111b, 211a, 211b) of the first connection component (110, 210) is short-circuited.

13. Switching device (100, 200) according to one of the preceding claims, in which two pressure hoses (112a, 112b) are mounted on the first connection component (110, 210) and/or four pressure hoses (122a, 122b, 124a, 124b, 222a, 222b, 224a, 224b) are mounted on the second connection component (120, 220), and/or in which the position determination of the distribution unit (130, 230) is realized using a sensor.

14. Concrete pump having a switching device (100, 200) designed according to one of Claims 1 to 13.

15. Method for switching a hydraulic-medium flow of a concrete pump using a switching device (100, 200) designed according to one of Claims 1 to 13, comprising the following steps:
- releasing a fastening means (140, 240), or resiliently mounted fastening element (142, 242), arranged between a first and a second connection component (110, 210, 120, 220);
- transferring a distribution unit (130, 230) between a first and a second position;
- firmly tightening the fastening means (140) or the resiliently mounted fastening element (142, 242) .

## Revendications

1. Dispositif de commutation (100, 200) destiné à commuter un flux hydraulique d'une pompe à béton, comprenant un premier composant de raccordement (110, 210) pour une liaison avec une pompe hydraulique (40), un second composant de raccordement (120, 220) pour une liaison avec un vérin d'entraînement (25, 35), et une unité de distribution (130, 230) agencée entre le premier et le second composant de raccordement (110, 210, 120, 220),
dans lequel le premier composant de raccordement (110, 210) présente deux guidages de fluide (111a, 111b, 211a, 211b) et le second composant de raccordement (120, 220) présente une première paire de guidages de fluide (121a, 121b, 221a, 221b) et une seconde paire de guidages de fluide (123a, 123b, 223a, 223b), et l'unité de distribution (130, 230) peut passer de manière réversible entre une première position dans laquelle les guidages de fluide (111a, 111b, 211a, 211b) du premier composant de raccordement (110, 210) sont en communication fluidique avec la première paire de guidages de fluide (121a, 121b, 221a, 221b) du second composant de raccordement (120, 220), et une seconde position dans laquelle les guidages de fluide (111a, 111b, 211a, 211b) du premier composant de raccordement (110, 210) sont en communication fluidique avec la seconde paire de guidages de fluide (123a, 123b, 223a, 223b) du second composant de raccordement (120, 220),
**caractérisé en ce que**
l'unité de distribution (130, 230) est reliée de manière étanche au premier et au second composant de raccordement (110, 120, 210, 220), et
**en ce que**
le premier et le second composant de raccordement (110, 120, 210, 220) sont reliés conjointement via au moins un moyen de fixation détachable (140, 240).

2. Dispositif de commutation (100, 200) selon la revendication 1, dans lequel l'unité de distribution (130, 230) peut passer par rotation ou par translation entre la première et la seconde position.

3. Dispositif de commutation (100, 200) selon la revendication 1 ou 2, dans lequel, lors d'un passage de l'unité de distribution (130, 230) entre la première et la seconde position, une position du premier et du second composant de raccordement (110, 210, 120, 220) reste inchangée.

4. Dispositif de commutation (100, 200) selon l'une quelconque des revendications précédentes, dans lequel l'unité de distribution (130, 230) présente une première surface d'étanchéité destinée à coopérer avec une surface d'étanchéité du premier composant de raccordement (110, 210) et/ou une seconde surface d'étanchéité destinée à coopérer avec une surface d'étanchéité du second composant de raccordement (120, 220).

5. Dispositif de commutation (100, 200) selon l'une quelconque des revendications précédentes, dans lequel le premier et le second composant de raccordement (110, 120, 210, 220) sont reliés conjointement de manière élastique.

6. Dispositif de commutation (100, 200) selon l'une quelconque des revendications précédentes, dans lequel le premier et le second composant de raccordement (110, 120, 210, 220) sont reliés conjointement de telle sorte qu'aucun fluide ne peut s'échapper entre le premier ou le second composant de raccordement (110, 120, 210, 220) et l'unité de distribution (130, 230) quand ledit au moins un moyen de fixation détachable (140, 240) est détaché.

7. Dispositif de commutation (100, 200) selon l'une quelconque des revendications précédentes, dans lequel le premier et le second composant de raccordement (110, 120, 210, 220) sont reliés conjointement via un élément de fixation monté de manière élastique (142, 242) de telle sorte que l'unité de distribution (130, 230) est reliée de manière étanche au premier et au second élément de raccordement (110, 120, 210, 220).

8. Dispositif de commutation (100, 200) selon l'une quelconque des revendications précédentes, dans lequel le moyen de fixation (140, 240) et/ou l'élément de fixation monté de manière élastique (142, 242) sont réalisés en tant qu'aide de guidage lors du passage de l'unité de distribution (130, 230) entre la première et la seconde position.

9. Dispositif de commutation (100, 200) selon l'une quelconque des revendications précédentes, dans lequel le premier et/ou le second composant de raccordement présente un élément de guidage (146, 246) pour le passage de l'unité de distribution (130, 230) entre la première et la seconde position.

10. Dispositif de commutation (100, 200) selon l'une quelconque des revendications précédentes, dans lequel l'unité de distribution (130, 230) présente un levier de manoeuvre (148, 248) pour le passage entre la première et la seconde position, de préférence dans lequel le levier de manoeuvre (148, 248) coopère avec un élément de guidage (146, 246) du premier ou du second composant de raccordement (110, 120, 210, 220).

11. Dispositif de commutation (100, 200) selon l'une quelconque des revendications précédentes, dans lequel l'unité de distribution (130, 230) présente, sur un côté tourné vers le second composant de raccordement (120, 220), au moins quatre ouvertures pour une liaison avec la première et la seconde paire de guidages de fluide (121a, 121b, 221a, 221b, 123a, 123b, 223a, 223b).

12. Dispositif de commutation (100, 200) selon l'une quelconque des revendications précédentes, dans lequel la paire de guidages de fluide (121a, 121b, 221a, 221b, 123a, 123b, 223a, 223b) du second composant de raccordement, qui n'est respectivement pas en communication fluidique avec un guidage de fluide (111a, 111b, 211a, 211b) du premier composant de raccordement (110, 210), est court-circuitée.

13. Dispositif de commutation (100, 200) selon l'une quelconque des revendications précédentes, dans lequel deux tuyaux de pression (112a, 112b) sont montés au niveau du premier composant de raccordement (110, 210) et/ou quatre tuyaux de pression (122a, 122b, 124a, 124b, 222a, 222b, 224a, 224b) sont montés au niveau du second composant de raccordement (120, 220), et/ou
dans lequel la détermination de la position de l'unité de distribution (130, 230) s'effectue à l'aide d'un capteur.

14. Pompe à béton comprenant un dispositif de commutation (100, 200) réalisé selon l'une quelconque des revendications 1 à 13.

15. Procédé de commutation d'un flux de fluide hydraulique d'une pompe à béton comprenant un dispositif de commutation (100, 200) réalisé selon l'une quelconque des revendications 1 à 13, comprenant les étapes suivantes consistant à :
- détacher un moyen de fixation (140, 240), agencé entre un premier et un second composant de raccordement (110, 210, 120, 220), ou un élément de fixation monté de manière élastique (142, 242) ;
- faire passer une unité de distribution (130, 230) entre une première et une seconde position ;
- serrer le moyen de fixation (140) ou l'élément de fixation monté de manière élastique (142, 242).
